# EUROPEAN PATENT SPECIFICATION

(11) **EP 2 030 273 B1**
(45) Date of publication and mention of the grant of the patent: **06.10.2010**
(21) Application number: 07766134.6
(22) Date of filing: 14.06.2007
(51) Int. Cl.: H01M 8/02, H01M 8/10

(54) **ION-CONDUCTING MEMBRANE**
IONENLEITFÄHIGE MEMBRAN
MEMBRANE CONDUCTRICE D'IONS

(30) Priority: 14.06.2006 GB 0611736
(43) Date of publication of application: 04.03.2009
(73) Proprietor: Johnson Matthey Public Limited Company, London EC1N 8EE (GB); University Of Reading, Whiteknights Reading RG6 6AD (GB)
(72) Inventor: COLQUHOUN, Howard, Matthew, Knutsford Cheshire WA16 8QN (GB); ZHU, Zhixue, Earley Reading RG6 7EG (GB); THOMPSETT, David, Caversham Reading RG4 7BQ (GB); WALSBY, Nadia, Michele, Didcot OX11 9DR (GB)
(74) Representative: Swift, Jane Elizabeth Berrisford
(86) International application number: PCT/GB2007/002224
(87) International publication number: WO 2007/144633

(56) References cited:
- WO-A-2005/068536
- JP-A- 2005 056 776
- JP-A- 2005 105 176
- JP-A- 2005 135 651
- US-A- 5 741 611
- US-B1- 6 335 112
- US-B2- 6 896 983

## Description

The present invention relates to ion-conducting membranes that are suitable for use in electrochemical devices, such as fuel cells, electrolysers and electrosynthesis cells.

A fuel cell is an electrochemical cell comprising two electrodes separated by an electrolyte. A fuel, e.g. hydrogen or methanol, is supplied to the anode and an oxidant, e.g. oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

In proton exchange membrane (PEM) fuel cells, the electrolyte is a solid polymeric membrane. The membrane is electronically insulating but ionically conducting. The membrane is typically proton-conducting, and protons, produced at the anode, are transported across the membrane to the cathode, where they combine with oxygen to create water.

Conventional membranes used in the PEM fuel cell and other devices include perfluorinated sulphonic acid membranes sold under the trade names Nafion^{®} (E.I. DuPont de Nemours and Co.), Aciplex^{®} (Asahi Kasei) and Flemion^{®} (Asahi Glass KK). However, the perfluorinated polymers are expensive and have limited ionic conductivity at elevated temperatures (greater than 100°C).

JP2005105176 discloses a proton conductive polymer electrolyte composed of an acrylic polymer containing a macrocyclic compound having an ionic dissociation group.

US5,741,611 discloses a non-liquid proton conductor membrane including (i) a matrix polymer dissolvable in a first solvent; (ii) an acidic multimer dissolvable in the first solvent; wherein the matrix polymer is selected such that when the non-liquid proton conductor membrane is contacted with a second solvent, the non-liquid proton conductor membrane swells and as a result the electrical contact improves.

The present inventors have sought to provide an alternative ion-conducting membrane that is suitable for use in a PEM fuel cell. Accordingly, the present invention provides an ion-conducting membrane comprising an ion-conducting polymer component and a macrocyclic compound chosen from the group consisting of phthalocyanines, porphyrins and tetraazaannulenes, wherein the macrocyclic compound is in metallated form and is functionalised with one or more ion-conducting groups selected from one or more of sulphonic acid groups, phosphonic acid groups and carboxylic acid groups, wherein the ion-conducting groups are bonded to phenyl groups in the macrocyclic compound.

The inventors have found that the macrocyclic compounds are retained within the ion-conducting membrane, and contribute to the ionic-conductivity of the membrane.

The term "ion-conducting group" is used to describe a functional group that enables a compound to transfer ions. Suitably the ion-conducting groups are proton-conducting groups, i.e. functional groups that enable a compound to transfer protons. Acidic groups such as sulphonic acid groups, phosphonic acid groups and carboxylic acid groups are preferred. Most preferably the ion-conducting groups are sulphonic acid groups.

The macrocyclic compound is suitably chosen from the group consisting of phthalocyanines, porphyrins (e.g. tetrabenzoporphyrin) and tetraazaannulenes and is most preferably a phthalocyanine. The structures of phthalocyanine (1), porphyrin (2), tetrabenzoporphyrin (3) and tetraazaannulene (4) are shown below:

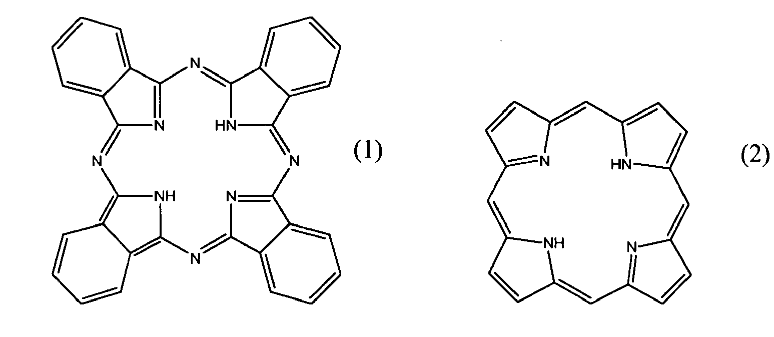

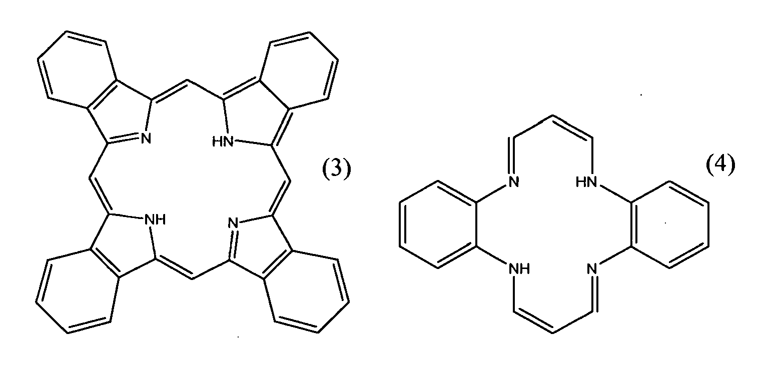

The phthalocyanines, porphyrins and tetraazaannulenes used in the present invention may not have the exact chemical structures shown above, but will be based upon the same basic skeleton. All the structures shown above are the free base forms of these macrocyclic compounds. However, according to the invention, the macrocyclic compound in the membrane is in a metallated form, e.g. for phthalocyanine:

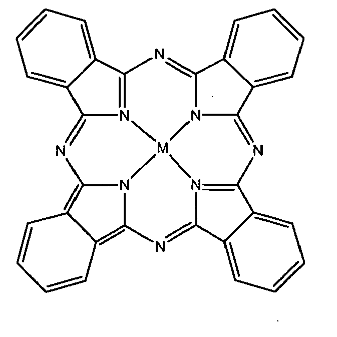

The metal or metalloid in the macrocyclic compound, M, is suitably chosen from a broad group of metals and metalloids including Cu, Fe, Co, Ni, Zn, Mn, Mg, Sn, Ca, V, Cr, Rh, Ru, Pd, Pt, Cd, Hg, Al, Ga, In, Tl, Sb, Bi, Y, Pr, Nd, Sm, Eu, Th, U and is preferably Cu, Fe, Co, Ni, Zn, Mg, Rh, Ru, Pd, Pt, and most preferably Cu.

Preferably the ion-conducting groups such as sulphonic acid groups are bonded to phenyl groups in the phthalocyanine, porphyrin or tetraazaannulene. In a preferred embodiment of the invention, one ion-conducting group (preferably a sulphonic acid group) is bonded to each phenyl group in the macrocyclic compound. It may be possible to have more than one ion-conducting group on each phenyl ring, but usually there will be one ion-conducting group on each phenyl ring. Preferred functionalised macrocyclic compounds are shown below:

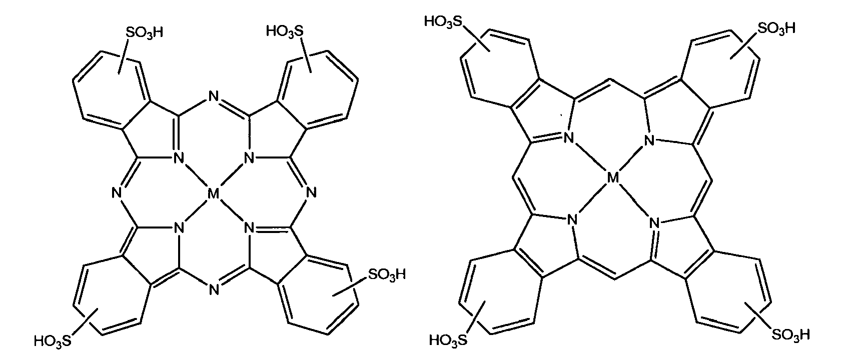

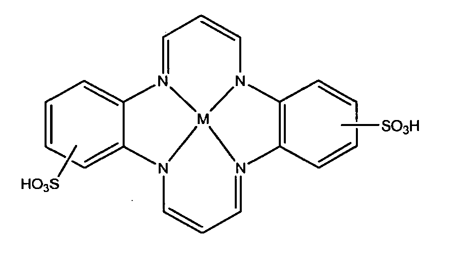

In the structures shown above, the sulphonic acid groups are all shown in their acidic (protonated) form. Whilst in the membrane, the groups will exist in both acidic (protonated) and basic (unprotonated) forms. The macrocyclic compound may initially be incorporated into the membrane with the acidic groups in a metallated form, e.g. the sodium form, and subsequently converted to the acidic form, and vice-versa ,

There may be further non-ion conducting substituents on the macrocyclic compounds, e.g. partially fluorinated phthalocyanines may be used.

Macrocyclic compounds that are functionalised with one or more ion-conducting groups are commercially available (e.g. copper (II) phthalocyanine-tetrasulphonic acid tetrasodium salt is available from Alfa Aesar, USA). Alternatively, they may be prepared by functionalising macrocyclic compounds with ion-conducting groups, e.g.

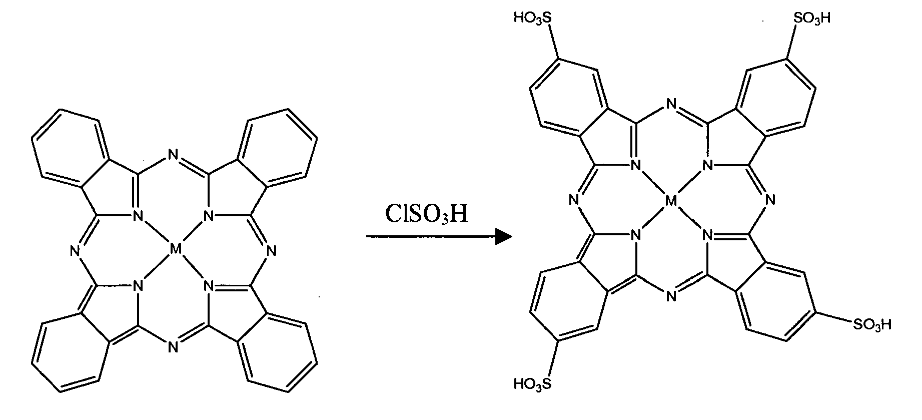

Depending on the nature of M, the metal or metalloid in the macrocylic compound, it may be possible for there to be axial ligands associated with M. This would be possible with metals such as Ru, Fe, Co, Rh, Ga, Tb, Ho, Dy, Tm, Eu and Lu. In most embodiments of the invention, the ion-conducting groups are present on the macrocycle, but in one embodiment of the invention, the macrocyclic compound is functionalised with one or more ion-conducting groups via one or more ion-conducting groups on an axial ligand. Possible axial ligands include pyridine, bipyridine, acetylacetone and derivatives thereof. An example of an axial ligand functionalised with an ion-conducting group is a sulphonic acid substituted pyridine.

The membrane may comprise more than one type of macrocyclic compound.

The polymer component is suitably a hydrocarbon polymer or a fluorocarbon polymer. The polymer component may consist of a single type of polymer or a blend of more than one type of polymer.

According to the invention, the polymer component is an ion-conducting polymer. In this embodiment, both the polymer component and the macrocyclic compound contribute to the ionic conductivity of the membrane. The polymer component may be a perfluorinated sulphonic acid polymer or may be a sulphonated hydrocarbon polymer such as a sulphonated polyaryletherketone or a sulphonated polyarylethersulphone. Preferred polymers include those disclosed in WO 2005/068536.

Suitably, both the polymer component and the macrocyclic compound are evenly dispersed throughout the membrane. The weight ratio of the polymer component to the macrocyclic compound is suitably 50:1 to 1:2, preferably from 20:1 to 1:1, most preferably from 10:1 to 2:1, such as from 6:1 to 2:1. (The weight ratio is based upon the weight of the polymer compared to the weight of the macrocyclic compound). The preferred ratio is likely to depend upon the exact nature of the polymer component and the macrocyclic compound.

The membrane may advantageously comprise additional components. In one embodiment of the invention, the membrane further comprises a reinforcing material. The reinforcing material may be discrete fibres or particles, but is preferably a porous web. The term "porous web" is used to describe any continuous porous reinforcing material that may be incorporated into a composite membrane. In one embodiment, the porous web may be an expanded polymer web or a woven or non-woven web. Preferred polymers include polytetrafluoroethylene (PTFE), polyetheretherketone (PEEK), polyethylene and polyvinylidene fluoride. In a second embodiment of the invention, the porous web is made up of randomly oriented individual fibres. This type of web is disclosed in EP 875 524. The fibres are suitably glass, polymer, ceramic, quartz, silica, carbon or metal fibres. (If carbon or metal fibres are used, the polymer layer must be sufficiently thick to electrically insulate the fibres). The fibres are preferably glass, quartz or amorphous silica fibres. In a third embodiment of the invention, the porous web is an electrospun fibre web. Electrospun webs are made by an electrospinning process wherein an electrically charged polymer solution or polymer melt is drawn from an orifice to a collector. This produces a web of randomly-oriented inter-tangled very fine fibres (the fibres typically have nanometer diameters). Such webs are described in US 2003/0195611.

The porosity of the porous web is suitably greater than 50%, preferably greater than 70%. The thickness of the porous web is suitably between 3µm and 40µm, preferably between 5µm and 25µm. Thicker webs are not preferred as it is desirable to keep the thickness of the composite membrane less than 50µm, preferably 30µm or less. Thinner webs are not preferred because they will provide less reinforcement.

Discrete fibres that are suitable for use as a reinforcing material include glass, polymer, ceramic, quartz, silica, carbon or metal fibres. (If carbon or metal fibres are used, the polymer layer must be sufficiently thick to electrically insulate the fibres). The fibres are preferably glass, quartz or amorphous silica fibres. The fibres suitably have an average diameter between 0.2µm and 500µmm and suitably have an average length between 0.05mm to 300mm.

In a further embodiment of the invention, the membrane may further comprise fillers such as dispersed silica or zirconium phosphate.

US 6,335,112 discloses PEM fuel cells, wherein the electrode or the membrane can contain a macrocyclic metal complex catalyst, e.g. iron phthalocyanine. The catalyst decomposes hydrogen peroxide formed during fuel cell operation and prevents the hydrogen peroxide from decomposing the polymer electrolyte membrane. In the present invention, the functionalised macrocyclic compound may be chosen such that it is capable of decomposing hydrogen peroxide. Suitable macrocyclic compounds include functionalised phthalocyanines containing Fe, Co, Cu or Zn. The functionalised macrocyclic compound may alternatively be chosen such that it is capable of catalysing hydrogen/oxygen recombination. Suitable macrocyclic compounds include functionalised phthalocyanines containing Pd, Pt, Rh, Ru or Ir.

The membrane of the invention may be prepared by mixing the polymer component and the functionalised macrocyclic compound together in a suitable solvent and casting the membrane. The preferred solvent will depend upon the polymer component but could be *N*-methyl-2-pyrrolidinone (NMP) for sulphonated polyaryletherketone or sulphonated polyarylethersulphone polymers, or could be an alcohol for perfluorinated sulphonic acid polymers. Alternatively, the membrane may be prepared by mixing the functionalised macrocyclic compound with a melt of the polymer component and extruding the membrane. The functionalised macrocyclic compound may be incorporated in its metallated form (e.g. sulphonic acid groups are present as the sodium salt) and subsequently hydrolysed to the acid form.

The membrane of the invention may be used in any electrochemical device requiring a membrane having enhanced ion-conduction (specifically proton-conduction) properties. Accordingly, a further aspect of the invention provides an electrochemical device comprising an ion-conducting membrane as hereinbefore described. Alternatively, there is provided the use of a membrane as hereinbefore described in an electrochemical device. In a preferred embodiment of the invention, the membranes are used in fuel cells. Thus, the present invention further provides a catalyst-coated membrane comprising an ion-conducting membrane according to the invention and an electrocatalyst layer deposited on the membrane. Suitable electrocatalysts are well known to the skilled person and include platinum and platinum alloys, either unsupported or supported on conducting carbon support materials.

The present invention yet further provides a membrane electrode assembly comprising an ion-conducting membrane according to the invention. Methods of preparing membrane electrode assemblies from membranes, catalyst inks and gas diffusion substrates are well known to the skilled person.

The present invention yet further provides an electrocatalyst ink, that is suitably used to prepare an electrocatalyst layer. The ink comprises an electrocatalyst, a polymer component and a macrocyclic component, wherein the macrocyclic component is functionalised with one or more ion-conducting groups. Such an ink provides an electrocatalyst layer wherein the macrocyclic compound is retained within the electrocatalyst layer and the macrocyclic compound contributes to the ionic-conductivity of the electrocatalyst layer. The invention further provides an electrocatalyst layer comprising an electrocatalyst, a polymer component and a macrocyclic component, wherein the macrocyclic component is functionalised with one or more ion-conducting groups. The polymer component and the macrocyclic component are as described above. Such a layer may be prepared by applying an electrocatalyst ink of the invention to a substrate such as a gas diffusion layer, a membrane or a transfer substrate.

In a further embodiment, membranes that are suitable for use in MEAs for PEM fuel cells can also be suitable for use in PEM electrolysers. A PEM electrolyser feeds water to a number of MEAs that are connected to a power supply capable of causing water electrolysis. Normally the water is supplied to the anode side of the MEA where oxygen is evolved. On the cathode side hydrogen is evolved. The anode and cathode electrodes are separated by a PEM that must conduct protons from anode to cathode and not be electronically conductive. Previously perfluorosulphonic acid (PFSA) membranes like Nafion, Flemion etc have been used in these applications but their temperature of operation is limited in practice to about 80°C. Above this temperature the materials become too soft and can allow contact between the anode and cathode electrodes creating an electrical short circuit. The membranes of the present invention are able to withstand much higher temperatures before softening and therefore allow operation at higher temperature. A higher temperature of operation for PEM electrolysers allows oxygen evolution to proceed at lower overpotentials and therefore consume less power during water electrolysis. Because the membranes of the present invention are stronger and more resilient than PFSA types they can be used at lower thicknesses that the PFSA type. For example, Nafion membranes for PEM electrolyser MEAs are normally in the range 100 to 200 microns, but membranes of the present invention would be suitable at thicknesses of only 50 microns, particularly when reinforced. Reinforcement has the same benefits for electrolyser applications as for fuel cell applications namely dimensional stability, strength, resistance to crack propagation etc.

In a still further embodiment, the membranes of the invention may also be used in electrosynthesis cells.

The invention will now be described by reference to examples that are illustrative and not limiting of the invention.

### Example 1

Copper (II) phthalocyanine-tetrasulphonic acid tetrasodium salt (0.0348 g, 0.0354 mmol, Na⁺ FW 984.26, H⁺ FW 896.26) was saturated in deionised water (0.188 g). Beads of a sulphonated polyaryletherketone polymer in the acid form having the repeat unit shown below (0.3 g, 0.284 mmol) were added to the mixture followed by N-methyl-2-pyrrolidinone (2.512 g), and stirred under dry nitrogen until a clear viscous solution was obtained. 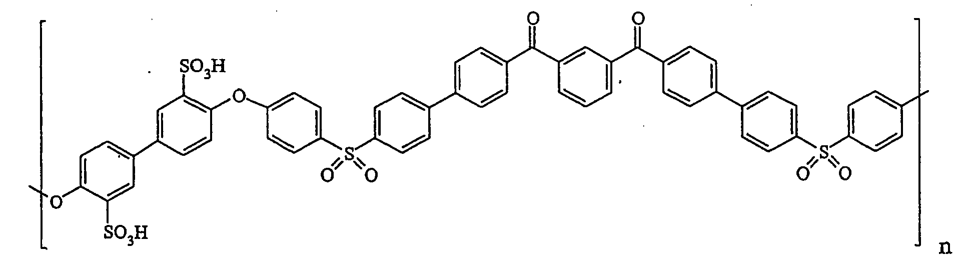 The solution was filtered through cotton-padded Celite 521 (Aldrich) under compressed air. The membrane was cast on a glass-plate using a Gardner Knife (set at a height of 300 µm above the glass surface), and dried at 50 °C to remove the majority of the solvent, and then at 105 °C under vacuum to constant weight. The resulting blue polymer film could be easily removed from the plate after equilibrating with atmospheric water vapour for several hours. The membrane thickness (ca. 39 µm) was measured at six points and the values averaged.

The weight ratio of the polymer to the phthalocyanine was 9.5:1 (equivalent to 4:1 based on sulphonic acid groups and a molar ratio of 8:1).

### Example 2

A mixture of copper (II) phthalocyanine-tetrasulphonic acid tetrasodium salt (0.0657 g, 0.0668 mmol) and sulphonated polyaryletherketone polymer beads in the acid form (repeat unit as shown in example 1) (0.285 g, 0.27 mmol) was stirred in 98% sulphuric acid (A. R. grade) (3 ml) at 60 °C overnight. The resulting clear, viscous blue solution was cooled and coagulated in deionised water. When coagulation was complete, the beads were filtered off on a coarse glass sinter, stirred in deionised water (100 mL) for 30 minutes at room temperature, and then refiltered. This process was repeated several times until the conductivity of the washings was less than 10 µs. The resulting beads were then dried in a stream of air at 75 °C, and finally under vacuum at 75 °C to constant weight. Blue beads of the polymer in the acid form (0.33 g) were added to N-methyl-2-pyrrolidinone (3.1 g), and stirred under dry nitrogen until a clear viscous solution was obtained. The solution was filtered through cotton-padded celite 521 (Aldrich) under compressed air. The membrane was cast on a glass-plate using a Gardner Knife (set at a height of 300 µm above the glass surface), and dried at 50 °C to remove the majority of the solvent, and then at 105 °C under vacuum to constant weight. The resulting blue polymer film could be easily removed from the plate after equilibrating with atmospheric water vapour for several hours. The membrane thickness (ca. 28 µm) was measured at six points and the values averaged.

The weight ratio of the polymer to the phthalocyanine was 4.8:1 (equivalent to a molar ratio of 4:1). The equivalent weight of the membrane was 427, which is substantially lower than the equivalent weight of a membrane consisting solely of the sulphonated polyaryletherketone polymer, which has an equivalent weight of 529.

### Example 3

A membrane was fabricated as in Example 2 with twice as high molar ratio of copper (II) phthalocyanine-tetrasulphonic acid tetrasodium salt (molar ratio of polymer to phthalocyanine of 2:1). The equivalent weight of the combined membrane was 420.

### Membrane Stability

The membrane of example 1 was tested to establish whether the phthalocyanine is retained within the membrane. The membrane was immersed in 1M sulphuric acid at 90°C for several hours and then boiled in water for an hour. The dry mass of the membrane was measured before and after this treatment and the two results were the same within experimental error (0.0210g and 0.0218g). The membrane retained its intense blue colour and neither the sulphuric acid nor the water acquired a blue tinge. It was concluded that the phthalocyanine was retained within the membrane.

### Fuel Cell Testing

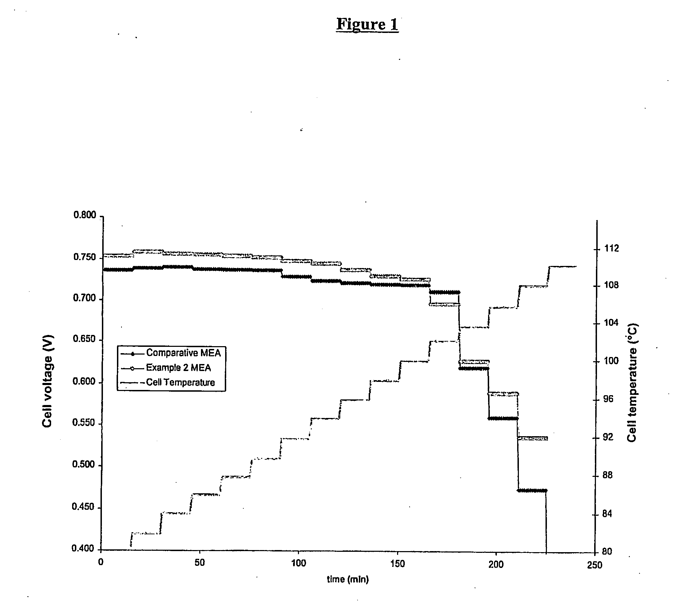

Two MEAs were formed, using state-of-the-art gas diffusion layers and catalyst layers. The membrane in the first MEA (example MEA) was a membrane prepared according to example 2. The membrane in the second MEA (comparative example MEA) was a sulphonated polyaryletherketone polymer membrane, as prepared in example 2, except that the membrane contained no copper phthalocyanine. The two MEAs were tested in a fuel cell in a temperature ramp experiment wherein the temperature of the fuel cell was increased from 80°C to 110°C (H₂/air, 210 kPa, 80°C dew point). Figure 1 shows how the cell voltage changes as the temperature is increased over a period of time. The cell voltage for the example MEA is higher than the cell voltage for the comparative MEA throughout most of the experiment.

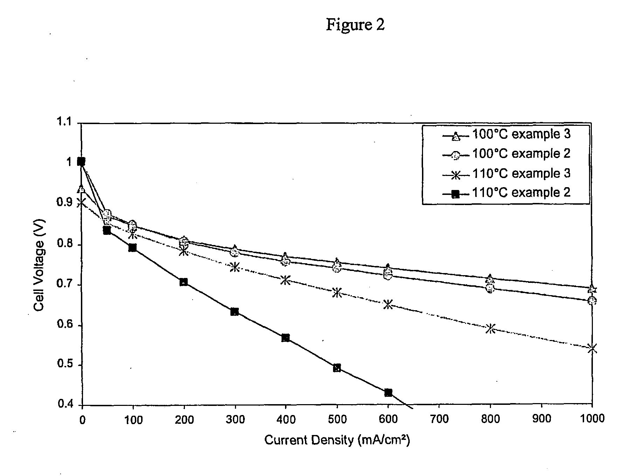

Two MEAs containing the 4:1 and 2:1 ratio membranes were tested in a small cell with H₂ and O₂ with incoming gas dew point of 80°C, 210 kPag pressure at 100 and 110°C. The polarisation curves of both MEAs at both temperatures are shown in Figure 2. At 100°C both MEAs gave near similar performance, indicating that the membrane conductivity were similar in both MEAs. At 110°C, the MEA with the 2:1 membrane showed significantly higher performance than the MEA with the 4:1 membrane, indicating that a greater amount of copper phthalocyanine dopant allows higher membrane conductivity under conditions of reduced water content.

## Claims

1. An ion-conducting membrane comprising an ion-conducting polymer component and a macrocyclic compound chosen from the group consisting of phthalocyanines, porphyrins and tetraazaannulenes, wherein the macrocyclic compound is in metallated form and is functionalised with one or more ion-conducting groups selected from one or more of sulphonic acid groups, phosphonic acid groups and carboxylic acid groups, wherein the ion-conducting groups are bonded to phenyl groups in the macrocyclic compound.

2. An ion-conducting membrane according to claim 1, wherein each phenyl group in the macrocyclic compound is functionalised with one proton-conducting group.

3. An ion-conducting membrane according to claim 1 or 2, wherein the proton-conducting groups are sulphonic acid groups.

4. An ion-conducting membrane according to any one of claims 1 to 3, wherein the metallated macrocyclic compound comprises Cu, Fe, Co, Ni, Zn, Mg, Rh, Ru, Pd or Pt.

5. An ion-conducting membrane according to claim 4, wherein the metallated macrocyclic compound comprises Cu.

6. An ion-conducting membrane according to any one of claims 1 to 5, wherein the weight ratio of the polymer component to the macrocyclic compound is between 50:1 and 1:2.

7. An ion-conducting membrane according to any one of claims 1 to 6, wherein the ion-conducting polymer is selected from the group consisting of a perfluorinated sulphonic acid polymer, a sulphonated polyaryletherketone polymer of a sulphonated polyarylethersulphone polymer.

8. An ion-conducting membrane according to any one of claims 1 to 7, wherein the membrane further comprises a reinforcing material.

9. A catalyst coated membrane comprising an ion-conducting membrane according to any preceding claim and an electrocatalyst layer on the membrane.

10. A membrane electrode assembly comprising an ion-conducting membrane according to any preceding claim.

11. An electrocatalyst ink comprising an electrocatalyst, an ion-conducting polymer component and a macrocyclic component chosen from the group consisting of phthalocyanines, porphyrins and tetraazaannulenes, wherein the macrocyclic component is in metallated form and is functionalised with one or more ion-conducting groups selected from one or more of sulphonic acid groups, phosphonic acid groups and carboxylic acid groups, wherein the ion-conducting groups are bonded to phenyl groups in the macrocyclic compound.

12. An electrocatalyst layer comprising an electrocatalyst, an ion-conducting polymer component and a macrocyclic component chosen from the group consisting of phthalocyanines, porphyrins and tetraazaannulenes, wherein the macrocyclic component is in metallated form and is functionalised with one or more ion-conducting groups selected from one or more of sulphonic acid groups, phosphonic acid groups and carboxylic acid groups, wherein the ion-conducting groups are bonded to phenyl groups in the macrocyclic compound.

## Patentansprüche

1. Ionenleitende Membran umfassend eine ionenleitende Polymerkomponente und eine aus der Gruppe bestehend aus Phthalocyaninen, Porphyrinen und Tetraazaannulenen ausgewählte makrocyclische Verbindung, wobei die makrocyclische Verbindung in metallierter Form vorliegt und mit einer oder mehreren ionenleitenden Gruppen funktionalisiert ist, die aus einer oder mehreren von Sulfonsäuregruppen, Phosphonsäuregruppen und Carbonsäuregruppen ausgewählt sind, wobei die ionenleitenden Gruppen an Phenylgruppen in der makrocyclischen Verbindung gebunden sind.

2. Ionenleitende Membran nach Anspruch 1, wobei jede Phenylgruppe in der makrocyclischen Verbindung mit einer protonenleitenden Gruppe funktionalisiert ist.

3. Ionenleitende Membran nach Anspruch 1 oder 2, wobei die protonenleitenden Gruppen Sulfonsäuregruppen sind.

4. Ionenleitende Membran nach irgendeinem der Ansprüche 1 bis 3, wobei die metallierte makrocyclische Verbindung Cu, Fe, Co, Ni, Zn, Mg, Rh, Ru, Pd oder Pt umfasst.

5. Ionenleitende Membran nach Anspruch 4, wobei die metallierte makrocyclische Verbindung Cu umfasst.

6. Ionenleitende Membran nach irgendeinem der Ansprüche 1 bis 5, wobei das Gewichtsverhältnis zwischen der Polymerkomponente und der makrocyclischen Verbindung zwischen 50:1 und 1:2 beträgt.

7. Ionenleitende Membran nach irgendeinem der Ansprüche 1 bis 6, wobei das ionenleitende Polymer aus der Gruppe bestehend aus einem perfluorierten Sulfonsäurepolymer, einem sulfonierten Polyaryletherketonpolymer oder einem sulfonierten Polyarylethersulfonpolymer ausgewählt ist.

8. Ionenleitende Membran nach irgendeinem der Ansprüche 1 bis 7, wobei die Membran ferner ein Verstärkungsmaterial umfasst.

9. Katalysatorbeschichtete Membran umfassend eine ionenleitende Membran nach irgendeinem vorangehenden Anspruch und eine Elektrokatalysatorschicht auf der Membran.

10. Membranelektrodenanordnung umfassend eine ionenleitende Membran nach irgendeinem vorangehenden Anspruch.

11. Elektrokatalysatortinte umfassend einen Elektrokatalysator, eine ionenleitende Polymerkomponente und eine aus der Gruppe bestehend aus Phthalocyaninen, Porphyrinen und Tetraazaannulenen ausgewählte makrocyclische Komponente, wobei die makrocyclische Komponente in metallierter Form vorliegt und mit einer oder mehreren ionenleitenden Gruppen funktionalisiert ist, die aus einer oder mehreren von Sulfonsäuregruppen, Phosphonsäuregruppen und Carbonsäuregruppen ausgewählt sind, wobei die ionenleitenden Gruppen an Phenylgruppen in der makrocyclischen Verbindung gebunden sind.

12. Elektrokatalysatorschicht umfassend einen Elektrokatalysator, eine ionenleitende Polymerkomponente und eine aus der Gruppe bestehend aus Phthalocyaninen, Porphyrinen und Tetraazaannulenen ausgewählte makrocyclische Komponente, wobei die makrocyclische Komponente in metallierter Form vorliegt und mit einer oder mehreren ionenleitenden Gruppen funktionalisiert ist, die aus einer oder mehreren von Sulfonsäuregruppen, Phosphonsäuregruppen und Carbonsäuregruppen ausgewählt sind, wobei die ionenleitenden Gruppen an Phenylgruppen in der makrocyclischen Verbindung gebunden sind.

## Revendications

1. Membrane conductrice d'ions comprenant un composant polymère conducteur d'ions et un composé macrocyclique choisi parmi le groupe constitué des phtalocyanines, des porphyrines et des tétraazaannulènes, dans laquelle le composé macrocyclique se présente sous une forme métallate et est fonctionnalisé avec un ou plusieurs groupe(s) conducteur(s) d'ions choisi(s) parmi un ou plusieurs des groupes acide sulfonique, groupes acide phosphonique et groupes acide carboxylique, dans laquelle les groupes conducteurs d'ions sont liés à des groupes phényle dans le composé macrocyclique.

2. Membrane conductrice d'ions selon la revendication 1, dans laquelle chaque groupe phényle dans le composé macrocyclique est fonctionnalisé avec un groupe conducteur de protons.

3. Membrane conductrice d'ions selon la revendication 1 ou 2, dans laquelle les groupes conducteurs de protons sont des groupes acide sulfonique.

4. Membrane conductrice d'ions selon l'une quelconque des revendications 1 à 3, dans laquelle le composé macrocyclique métallate comprend du Cu, Fe, Co, Ni, Zn, Mg, Rh, Ru, Pd ou Pt.

5. Membrane conductrice d'ions selon la revendication 4, dans laquelle le composé macrocyclique métallate comprend du Cu.

6. Membrane conductrice d'ions selon l'une quelconque des revendications 1 à 5, dans laquelle le rapport en poids du composant polymère au composé macrocyclique est compris entre 50:1 et 1:2.

7. Membrane conductrice d'ions selon l'une quelconque des revendications 1 à 6, dans laquelle le polymère conducteur d'ions est choisi parmi le groupe constitué d'un polymère d'acide sulfonique perfluoré, d'un polymère de polyaryléthercétone sulfoné ou d'un polymère de polyaryléthersulfone sulfoné.

8. Membrane conductrice d'ions selon l'une quelconque des revendications 1 à 7, dans laquelle la membrane comprend de manière supplémentaire un matériau de renfort.

9. Membrane revêtue de catalyseur comprenant une membrane conductrice d'ions selon l'une quelconque des revendications précédentes et une couche type électrocatalyseur sur la membrane.

10. Assemblage d'électrode du type membrane comprenant une membrane conductrice d'ions selon l'une quelconque des revendications précédentes.

11. Encre électrocatalyseur comprenant un électrocatalyseur, un composant polymère conducteur d'ions et un composant macrocyclique choisi parmi le groupe constitué des phtalocyanines, des porphyrines et des tétraazaannulènes, dans laquelle le composant macrocyclique se présente sous une forme métallate et est fonctionnalisé avec un ou plusieurs groupe(s) conducteur(s) d'ions choisi(s) parmi un ou plusieurs des groupes acide sulfonique, des groupes acide phosphonique et des groupes acide carboxylique, dans laquelle les groupes conducteurs d'ions sont liés à des groupes phényle dans le composé macrocyclique.

12. Couche électrocatalyseur comprenant un électrocatalyseur, un composant polymère conducteur d'ions et un composant macrocyclique choisi parmi le groupe constitué des phtalocyanines, des porphyrines et des tétraazaannulènes, dans laquelle le composant macrocyclique se présente sous une forme métallate et est fonctionnalisé avec un ou plusieurs groupe(s) conducteur(s) d'ions choisi(s) parmi un ou plusieurs parmi les groupes acide sulfonique, les groupes acide phosphonique et les groupes acide carboxylique, dans laquelle les groupes conducteurs d'ions sont liés à des groupes phényle dans le composé macrocyclique.
